# EUROPÄISCHE PATENTSCHRIFT

(11) **EP 2 628 147 B1**
(45) Veröffentlichungstag und Bekanntmachung des Hinweises auf die Patenterteilung: **09.11.2016**
(21) Anmeldenummer: 11757269.3
(22) Anmeldetag: 09.09.2011
(51) Int. Cl.: B60Q 11/00, B60Q 1/52, G08G 1/16, G07C 5/00, G07C 5/08

(54) **VORRICHTUNG UND VERFAHREN ZUR SIGNALISIERUNG VON FUNKTIONSAUSFÄLLEN EINES FAHRZEUGS**
DEVICE AND METHOD FOR SIGNALING MALFUNCTIONS OF A VEHICLE
DISPOSITIF ET PROCÉDÉ DE SIGNALISATION DE DYSFONCTIONNEMENTS DANS UN VÉHICULE

(30) Priorität: 14.10.2010 DE 102010042432
(43) Veröffentlichungstag der Anmeldung: 21.08.2013
(73) Patentinhaber: Robert Bosch GmbH, 70442 Stuttgart (DE)
(72) Erfinder: HEYL, Andreas, 71640 Ludwigsburg (DE)
(86) Internationale Anmeldenummer: PCT/EP2011/065680
(87) Internationale Veröffentlichungsnummer: WO 2012/048970

(56) Entgegenhaltungen:
- EP-A2- 1 878 595
- DE-A1- 10 018 178
- DE-A1- 10 153 151
- DE-A1-102006 039 183
- DE-C1- 10 007 573
- US-A1- 2005 010 339
- US-A1- 2007 296 564
- US-B1- 6 172 602
- MIZUI K ET AL: "Vehicle-to-vehicle 2-way communication and ranging system using spread spectrum technique: proposal of double boomerang transmission system", VEHICLE NAVIGATION AND INFORMATION SYSTEMS CONFERENCE, 1994. PROCEEDIN GS., 1994 YOKOHAMA, JAPAN 31 AUG.-2 SEPT. 1994, NEW YORK, NY, USA,IEEE, 31. August 1994 (1994-08-31), Seiten 153-158, XP010136540, DOI: 10.1109/VNIS.1994.396848 ISBN: 978-0-7803-2105-2

## Beschreibung

### Stand der Technik

Die Erfindung geht aus von einer Vorrichtung oder einem Verfahren zur Signalisierung eines Fehlers in einem Fahrzeug in die Umgebung des Fahrzeugs nach Gattung der unabhängigen Ansprüche.

Aus der US-2008 028 45 75 A1 ist bereits eine Vorrichtung bekannt, die ein Diagnose-System eines Fahrzeugs mit einer Kommunikationseinrichtung verbindet. Die Kommunikationseinrichtung sendet automatisch Ergebnisse des Diagnose-Systems von dem Fahrzeug zu einer entfernten Einrichtung, um eine Ferndiagnose des Fahrzeugs zu erlauben.

Aus der US 2005/0010339 A1 ist ein Verfahren und eine Vorrichtung für die Selbstdiagnose eines Wasserfahrzeugs bekannt, bei dem ein Fehlerzustand eines Steuergerätes des Antriebs detektiert und in einer Anzeige vor dem Fahrer dargestellt wird.

Aus der EP 1878595 A2 ist ein Reifendrucksensor-System bekannt, bei dem ein Druck-Anstieg oder ein Druckabfall in einzelnen Reifen einem Fahrer dargestellt werden.

Aus der US 6,172,602 B1 ist eine Zustands-Überwachungseinrichtung für einen Lastkraftwagen bekannt, bei dem die Zustände von verschiedenen Fahrzeugsystemen wie beispielsweise dem Ölfilter oder dem Luftfilter einem Fahrer des Lastkraftwagens angezeigt werden.

Aus der DE 10007573 C1 ist eine Vorrichtung zur funkbasierten Gefahrenwarnung des Fahrers eines Kraftfahrzeugs bekannt. Die Aktivierung einer Datenübertragungsvorrichtung erfolgt durch einen Fahrer mittels einer manuellen Betätigung eines Schalters. Ein automatisches Erzeugen und Senden einer Gefahrenwarnung erfolgt nur, wenn durch interne Crash-Sensoren ein Unfall des Fahrzeugs festgestellt wird.

Die DE 10018178 A1 zeigt ein elektromechanisches Bremssystem für ein Kraftfahrzeug mit einer die einwandfreie Systemfunktion kontrollierenden sowie eine fehlerabhängige Fehlerbehandlung durchführenden elektronischen Überwachungseinheit, wobei bei Erkennen eines Fehlers das Verkehrsumfeld aufgrund der herabgesetzten Bremsleistung gewarnt wird Andere Verkehrsteilnehmer werden mittels akustischer und/oder optischer Warnsignale auf das betroffene Fahrzeug als mögliche Gefahrenquelle aufmerksam gemacht.

### Offenbarung der Erfindung

### Vorteile der Erfindung

Die erfindungsgemäße Vorrichtung zur Signalisierung eines Fehlers in einem Fahrzeug in die Umgebung des Fahrzeugs mit den Merkmalen des unabhängigen Anspruchs hat demgegenüber den Vorteil, dass ein durch den Fehler verursachter Funktionsausfall, welcher sich auf ein Fahrverhalten des Fahrzeuges auswirken kann, in die Umgebung des Fahrzeugs signalisiert wird. Der Fehler kann beispielsweise ein transienter oder permanenter Fehler sein. Ein transienter Fehler unterscheidet sich von einem permanenten Fehler darin, dass ein transienter Fehler ein flüchtiger Fehler in einer Hardware ist, der beispielsweise durch Einflüsse der Umgebung ausgelöst werden kann. Eine Auswerteeinheit der Vorrichtung stellt fest, ob ein von einem Steuergerät diagnostizierter Fehler zu einer Änderung des Fahrverhaltens führen wird. Die Auswerteeinheit veranlasst dann eine Ausgabeeinheit zu einer Ausgabe einer Warnung in die Umgebung des Fahrzeugs. Damit wird erreicht, dass andere Verkehrsteilnehmer, welche sich in der Nähe des Fahrzeugs befinden, sich auf Änderung des Fahrverhaltens des Fahrzeugs und eine damit geänderte Verkehrssituation einstellen können. Insbesondere können sich durch die Ausgabe einer Warnung die anderen Verkehrsteilnehmer auf potentiell gefährliche Situationen vorbereiten und entsprechend reagieren. Gerade in gefährlichen Situationen können auf diese Weise Unfälle vermieden werden.

Durch die in den abhängigen Ansprüchen aufgeführten Maßnahmen sind vorteilhafte Weiterbildungen und Verbesserungen der im unabhängigen Anspruch angegebenen Vorrichtung möglich.

Ferner verfügt die Ausgabeeinheit zur Ausgabe einer Warnung über Mittel zur Ausgabe eines akustischen oder visuellen Signals. Durch die Ausgabe einer akustischen oder visuellen Warnung in die Umgebung des Fahrzeugs wird anderen Verkehrsteilnehmern unmittelbar klar, dass mit einer Fehlfunktion des Fahrzeugs zu rechnen ist.

Die Ausgabeeinheit weist eine Schnittstelle zu einer Fahrzeug-zu-Fahrzeug-Kommunikationseinrichtung auf. Über diese Schnittstelle bzw. über die Fahrzeug-zu-Fahrzeug-Kommunikationseinrichtung kann die Ausgabe einer Warnung anderen Verkehrsteilnehmern übermittelt werden, die beispielsweise eine Warnung mittels eines akustischen oder visuellen Signals nicht erreichen würde.

Ferner ist vorteilhaft, wenn die Schnittstellen der Auswerteeinheit als Datenbusschnittstellen, insbesondere als CAN-Schnittstellen, ausgelegt sind. Der CAN-Standard erleichtert sowohl die Verbindung der Auswerteeinheit der erfindungsgemäßen Vorrichtung mit einem Steuergerät zur Diagnose des Fehlers als auch mit einer Ausgabeeinheit zur Ausgabe einer Warnung.

Weiterhin ist es besonders vorteilhaft, wenn die Auswerteeinheit der erfindungsgemäßen Vorrichtung eine Warnung veranlasst, sollte der Fehler auf eine zu erwartende Manövrierunfähigkeit, eine Verlangsamung und/oder einen Beleuchtungsausfall des Fahrzeugs hinweisen, da dies zu gefährlichen Situationen führen kann.

Das Verfahren zur Signalisierung eines Fehlers in einem Fahrzeug, welches einen Fehler, der von einem Steuergerät diagnostiziert wurde, auswertet und gegebenenfalls eine Warnung ausgibt, wenn eine Änderung des Fahrverhaltens zu erwarten ist, hat den Vorteil, dass es frühzeitig ermöglicht, auf die zu erwartende Änderung vorbereitende Maßnahmen zu treffen.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 ein Ausführungsbeispiel einer erfindungsgemäßen Vorrichtung,
Figur 2 ein Ablaufdiagramm eines erfindungsgemäßen Verfahrens.

### Ausführungsformen der Erfindung

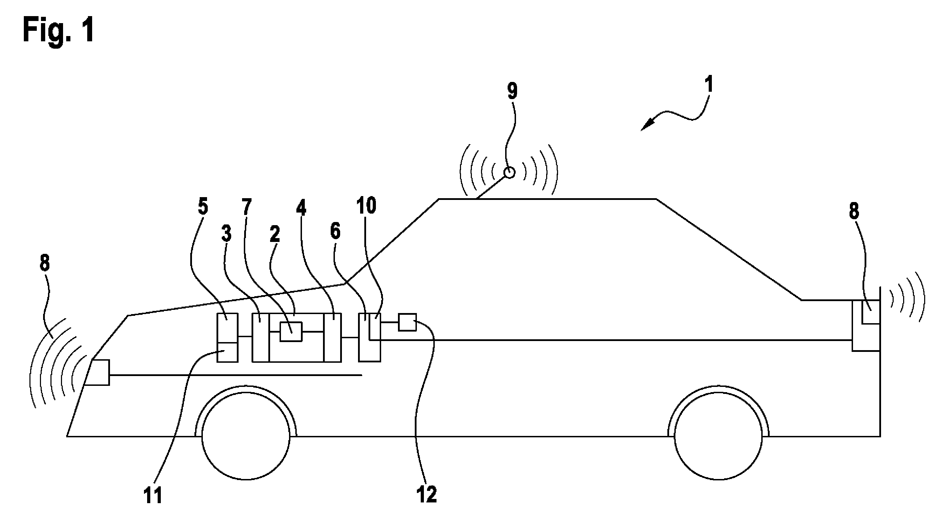

In der Figur 1 ist ein Fahrzeug 1 mit einer erfindungsgemäßen Vorrichtung 2 zur Signalisierung eines Fehlers gezeigt. Die Vorrichtung 2 weist eine erste Schnittstelle 3 zu einem Steuergerät 5 auf. Das Steuergerät 5 weist einen Speicher 11 auf. Ferner weist die Vorrichtung 2 eine zweite Schnittstelle 4 zu einer Ausgabeeinheit 6 auf. Die Vorrichtung 2 weist außerdem eine Auswerteeinheit 7 auf. Die Auswerteeinheit 7 der Vorrichtung 2 ist über die zweite Schnittstelle 4 mit einer Ausgabeeinheit 6 verbunden. Die Ausgabeeinheit 6 weist eine weitere Schnittstelle 10 auf, die mit einer Fahrzeug-zu-Fahrzeug-Kommunikationseinrichtung 12 verbunden ist. Die Fahrzeug-zu-Fahrzeug-Kommunikationseinrichtung 12 weist wiederum eine Verbindung zu einer Antenne 9 auf.

Das Steuergerät 5 dient zur Diagnose des Fehlers. Das Steuergerät 5 überwacht Fahrzeugfunktionen und diagnostiziert Fehler bei Fahrzeugfunktionen. Beispielsweise wird die Funktion der Motorsteuerung, Getriebesteuerung, und/oder der Lichtsteuerung überwacht. Wird ein Fehler in einer Fahrzeugfunktion festgestellt, so wird dieser Fehler der Vorrichtung 2 über die erste Schnittstelle 3 mitgeteilt. Beispielsweise wird von dem Steuergerät 5 in einem Fehlerspeicher 11 ein Eintrag vorgenommen, der über die erste Schnittstelle 3 von der Vorrichtung 2 ausgelesen wird. Der Eintrag kann eine Datenstruktur mit einem Fehlercode aufweisen, der Rückschlüsse auf die Fehlfunktion erlaubt.

In einer weiteren Ausführungsform kann das Steuergerät 5 einen Ausfall eines weiteren Steuergerätes bzw. den Funktionsausfall dieses weiteren Steuergeräts über eine CAN-Timeout-Funktion feststellen. Eine CAN-Timeout-Funktion liefert einen Fehlercode, wenn ein Datenversand an das weitere Steuergerät fehlschlägt.

In einer weiteren Ausführungsform entprellt das Steuergerät 5 einen auftretenden Fehler zuerst, der einen Funktionsverlust anzeigt, um den Fehler abzufangen und den Funktionsverlust zu reduzieren. Beim Entprellen wird geprüft, ob ein detektiertes Fehlersignal sich zeitlich bestätigt, beispielsweise wird ein Fehler erst dann diagnostiziert, wenn dieser nach Ablauf einer Zeitspanne nach erstmaligem Auftreten noch vorliegt. Die Mitteilung über die erste Schnittstelle 3 kann nun beispielsweise beim Beginn, während oder am Ende der Entprellung generiert werden.

In einer weiteren Ausführungsform überführt das Steuergerät 5 den mit dem Fehler verbundenen unsicheren Zustand wieder in einen sicheren Zustand. Während das Steuergerät 5 den Übergang vom unsicheren in den sicheren Zustand durchführt, kann das Steuergerät 5 den Fehler über die erste Schnittstelle 3 der Vorrichtung zur Signalisierung des Fehlers mitteilen. In diesem Fall kann es sein, dass ein Funktionsverlust erst einige Zeit später nach der Fehlerfeststellung zu erwarten ist. Die sich damit ergebende Vorlaufzeit kann genutzt werden, um rechtzeitig anderen Verkehrsteilnehmern den Funktionsverlust anzukündigen. Beispielsweise kann ein unsicherer Zustand einen Verlust eines Antriebs des Fahrzeugs 1 kennzeichnen, und als ein sicherer Zustand kann ein gestopptes Fahrzeug 1 angesehen werden.

In einer weiteren Ausführungsform kann das Steuergerät 5 auch eine Degradierung bzw. Reduzierung von Funktionen des Fahrzeugs feststellen. Dazu prüft das Steuergerät 5 kontinuierlich ein von einem anderen Bauteil gemessenes Signal oder einem von dem Bauteil gemeldeten Datenwert. Liegt das Signal oder der Datenwert über bzw. unter einer bestimmten Schwelle, bedeutet dies eine zu erwartende Funktionsreduktion. Beispielsweise kann eine Bauteilschutzfunktion ein Bauteil überwachen, indem es einen Signalpegel oder einen Datenwert prüft, und dieses Bauteil zum Schutz abschaltet, wenn der Signalpegel oder der Datenwert eine vorgegebene Schwelle überschreitet oder unterschreitet. In diesem Fall kann das Steuergerät 5 den Signalpegel oder den Datenwert ebenso auswerten, um eine Antizipierung einer Funktionsreduktion festzustellen. In diesem Fall kann das Steuergerät 5 noch vor einem Abschalten des Bauteils einen Fehler über die erste Schnittstelle 3 liefern. Beispielsweise kann eine Batteriespannung einer Batterie über ein entsprechendes Signal ausgelesen werden. Um einen Funktionsverlust der Batterie vor Unterladung zu verhindern, findet eine Abtrennung der Batterie statt, wenn die Batteriespannung eine Unterladungs-Schwelle unterschreitet. Bevor diese Unterladungs-Schwelle erreicht wird, kann das Unterscheiten einer Schwelle geprüft werden, die zur Erkennung der zu erwartenden Abtrennung der Batterie genutzt wird.

Die Auswerteeinheit 7 empfängt über die erste Schnittstelle 3 einen diagnostizierten Fehler von dem Steuergerät 5. Die Auswerteeinheit 7 stellt fest, ob der über die erste Schnittstelle 3 empfangene Fehler zu einer Änderung des Fahrverhaltens des Fahrzeugs 1 führt. In diesem Fall wird über die zweite Schnittstelle 4 die Ausgabeeinheit 6 zur Ausgabe einer Warnung bzw. Warnmeldung veranlasst. Die ausgegebene Warnung bezieht sich auf den empfangenen Fehler.

In einer weiteren Ausführungsform kann die Auswerteeinheit 7 einen Eintrag aus dem Speicher 11 über die erste Schnittstelle 3 von dem Steuergerät 5 auslesen. Dieser Eintrag kann beispielsweise eine Datenstruktur sein, welche einen Fehlercode aufweist.

Die Auswerteeinheit 7 vergleicht den über die Schnittstelle 3 übermittelten bzw. ausgelesenen Fehlercode mit Werten einer Tabelle, die jedem Fehlercode eine Information über einem mit dem Fehler verbundenen Funktionsverlust zuordnen. Durch Nachschlagen des mit dem Fehlercode verbundenen Funktionsverlusts in der Tabelle führt die Auswerteeinheit 7 eine Klassifikation durch. Die Klassifikation klassifiziert, ob der Fehler ignoriert werden kann oder ob eine Warnung ausgeben wird. Der Fehler wird ignoriert, wenn dem Fehler kein kritischer Funktionsverlust zugeordnet ist, also der Funktionsverlust keine Auswirkungen auf das Fahrverhalten des Fahrzeugs 1 hat. Ist der dem Fehler zugeordnete Funktionsverlust so kritisch, dass es zu Auswirkungen auf das Fahrverhalten des Fahrzeugs 1 kommt, wird die Ausgabe einer Warnung angestoßen. Zur Ausgabe einer Warnung wird eine Nachricht generiert, die über die zweite Schnittstelle 4 zu der Ausgabeeinheit 6 gesendet wird. Beispielsweise kann ein Fehler im Steuergerät 5 bedeuten, dass ein Ausfall eines Antriebs zu erwarten ist. Daraufhin wird eine Nachricht generiert, die einen Hinweis auf eine Verlangsamung des Fahrzeugs 1 enthält.

Beispielsweise kann die Nachricht lauten: bei Feststellung eines Verlustes der Lenkhilfunterstützung "Achtung eingeschränkt manövrierfähig", bei baldigem Verlust des Antriebs "Achtung Verlangsamung zu erwarten", bei Verlust des Reifendrucks "Achtung Verlangsamung mit eingeschränkter Manövrierfähigkeif, bei Verlust der Lichtanlage "Achtung unbeleuchtetes Objekt".

Die Ausgabeeinheit 6 hat die Funktion, eine Warnung in die Umgebung des Fahrzeugs auszugeben. Dazu empfängt die Ausgabeeinheit 6 über eine zweite Schnittstelle 4 von der Auswerteeinheit 7 die auszugebende Nachricht. Dabei verfügt die Ausgabeeinheit 6 über Mittel, welche die auszugebende Nachricht in unterschiedlicher Weise in die Umgebung des Fahrzeugs ausgeben kann.

Die Ausgabeeinheit 6 übermittelt die Warnung in Form einer Nachricht über die dritte Schnittstelle 10 zu der Fahrzeug-zu-Fahrzeug-Kommunikationseinrichtung 12. Die Fahrzeug-zu-Fahrzeug-Kommunikationseinrichtung 12 sendet die Nachricht mit der Warnung über die Antenne 9 in die Umgebung des Fahrzeugs, insbesondere zu anderen Fahrzeugen. Ferner weist die Ausgabeeinheit 6 Mittel 8 zur Ausgabe eines akustischen oder eines visuellen Signals auf. Die Mittel 8 zur Ausgabe des akustischen oder visuellen Signals können über eine codierte Signalfolge die Warnung in die Umgebung des Fahrzeugs mitteilen. Dazu übersetzt die Ausgabeeinheit 6 die auszugebende Nachricht in entsprechende Signale. Beispielsweise kann die Mitteilung über spezielle Blink- oder Lichtsignale erfolgen. Die Nachricht "Achtung eingeschränkt manövrierfähig" kann beispielsweise in ein schnelles Blinken aller Blinker des Fahrzeugs 1 übersetzt werden. Ebenso sind beispielsweise das An- und Ausschalten von Lampen mit unterschiedlichen Intervallen möglich.

Das Steuergerät 5 überwacht Fahrzeugfunktionen und weitere Bauteile. Diagnostiziert das Steuergerät 5 einen Fehler wird dieser über die erste Schnittstelle 3 der Vorrichtung 2 zur Verfügung gestellt bzw. übermittelt. Die Auswerteeinheit 7 der Vorrichtung 2 empfängt den Fehler über die erste Schnittstelle 3 und bewertet, ob der Fehler zu einer Änderung eines Fahrverhaltens des Fahrzeugs 1 führen kann. Stellt die Auswerteeinheit 7 eine zu erwartende Änderung des Fahrverhaltens des Fahrzeugs 1 fest, wird über die zweite Schnittstelle 4 eine Ausgabe einer Warnung mittels der Ausgabeeinheit 6 veranlasst.

In einer weiteren Ausführungsform kann das Fahrzeug 1 als ein Elektrofahrzeug ausgebildet sein. In diesem Fall kann bei einem Energieverlust der Batterie die Nachricht "Achtung Verlangsamung zu erwarten" ausgegeben werden.

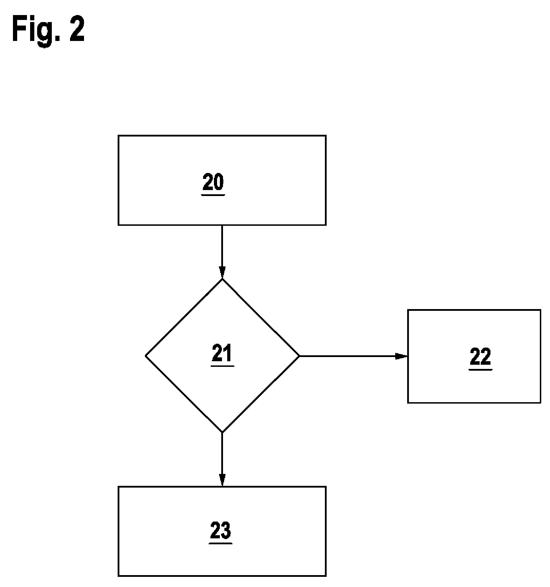

In der Figur 2 ist der Ablauf des erfindungsgemäßen Verfahrens gezeigt. In einem ersten Verfahrensschritt 20 wird ein Fehler empfangen. Dieser Fehler wird in einem zweiten Verfahrensschritt 21 dahingehend ausgewertet, ob er zu einer Beeinträchtigung bzw. zu einer Änderung des Fahrverhaltens des Fahrzeugs 1 führt. Ist dies nicht der Fall, folgt ein dritter Verfahrensschritt 22, in dem keine Ausgabe stattfindet. Ist es aber der Fall, dass mit einer Änderung des Fahrverhaltens des Fahrzeugs 1 zu rechnen ist, folgt nach dem zweiten Verfahrensschritt 21 ein vierter Verfahrensschritt 23. In dem vierten Verfahrensschritt 23 wird eine Nachricht mit einer Warnung generiert. Die Nachricht wird so generiert, dass sie eine auf den Fehler bzw. den damit verbundenen Funktionsausfall bezogene Warnung enthält. Ferner findet in dem vierten Verfahrensschritt 23 die Ausgabe der Nachricht mit der Warnung über eine Ausgabeeinheit statt.

Ein weiteres Fahrzeug, welches mittels Fahrzeug-zu-Fahrzeug-Kommunikation eine Warnung des Fahrzeugs 1 empfängt, kann diese über eine entsprechende Wiedergabeeinrichtung einem Fahrer des weiteren Fahrzeugs mitteilen. Beispielsweise kann auf diesem Wege dem Fahrer des weiteren Fahrzeugs ein Warnsymbol, beispielsweise in Form eines Warndreiecks, angezeigt werden, indem das Warnsymbol in einer Anzeige eines Fahrerinformationssystems des weiteren Fahrzeugs vorzugsweise mit einer Darstellung der empfangen Warnung in Textform visualisiert wird.

## Patentansprüche

1. Vorrichtung (2) zur Signalisierung eines Fehlers in einem Fahrzeug (1) mit einer ersten Schnittstelle (3) zu einem Steuergerät (5) zur Diagnose des Fehlers und mit einer zweiten Schnittstelle (4) zu einer Ausgabeeinheit (6) zur Ausgabe einer Warnung an andere Verkehrsteilnehmer in die Umgebung des Fahrzeugs (1), wobei die Ausgabeeinheit (6) eine dritte Schnittstelle (10) zu einer Fahrzeug-zu-Fahrzeug-Kommunikations-Einrichtung (12) zur Ausgabe der Warnung an andere Verkehrsteilnehmer aufweist, mit einer Auswerteeinheit (7), die über die erste Schnittstelle (3) eine Diagnose des Fehlers von dem Steuergerät (5) empfängt, die anhand der Diagnose des Fehlers feststellt, dass durch den Fehler eine Änderung eines Fahrverhaltens des Fahrzeugs (1) zu erwarten ist, und die über die zweite Schnittstelle (4) eine Ausgabe einer auf den Fehler bezogenen Warnung veranlasst.

2. Vorrichtung (2) nach Anspruch 1, **dadurch gekennzeichnet, dass** die Ausgabeeinheit (6) über Mittel zur Ausgabe eines akustischen oder eines visuellen Signals (8) verfügt.

3. Vorrichtung (2) nach einem der vorhergehenden Ansprüche, **dadurch gekennzeichnet, dass** die Schnittstellen (3, 4) der Auswerteeinheit (7) als CAN-Schnittstellen ausgelegt sind.

4. Vorrichtung (2) nach einem der vorhergehenden Ansprüche, **dadurch gekennzeichnet, dass** die Auswerteeinheit (7) eine Warnung veranlasst, wenn der Fehler auf eine Manövrierunfähigkeit, Verlangsamung und/oder einen Beleuchtungsausfall des Fahrzeugs hinweist.

5. Verfahren zur Signalisierung eines Fehlers in einem Fahrzeug (1), wobei ein von einem Steuergerät (5) diagnostizierter Fehler empfangen wird, wobei der Fehler dahingehend ausgewertet wird, ob eine Änderung des Fahrverhaltens des Fahrzeugs (1) zu erwarten ist, wobei über eine Ausgabeeinheit (6) eine auf den Fehler bezogene Warnung ausgeben wird, wenn anhand der Diagnose des Fehlers festgestellt wird, dass durch den Fehler eine Änderung eines Fahrverhaltens des Fahrzeugs (1) zu erwarten ist, wobei die Warnung in die Umgebung des Fahrzeugs an andere Verkehrsteilnehmer mittels einer Fahrzeug-zu-Fahrzeug-Kommunikations-Einrichtung (12) ausgegeben wird.

## Claims

1. Apparatus (2) for signalling a fault in a vehicle (1), having a first interface (3) to a control device (5) for diagnosing the fault and having a second interface (4) to an output unit (6) for outputting a warning to other road users in the surroundings of the vehicle (1), the output unit (6) having a third interface (10) to a vehicle-to-vehicle communication device (12) for outputting the warning to other road users, having an evaluation unit (7) which receives a diagnosis of the fault from the control device (5) via the first interface (3), determines, on the basis of the diagnosis of the fault, that a change in a driving behaviour of the vehicle (1) can be expected as a result of the fault and causes a warning based on the fault to be output via the second interface (4).

2. Apparatus (2) according to Claim 1, **characterized in that** the output unit (6) has means for outputting an acoustic or visual signal (8).

3. Apparatus (2) according to one of the preceding claims, **characterized in that** the interfaces (3, 4) of the evaluation unit (7) are in the form of CAN interfaces.

4. Apparatus (2) according to one of the preceding claims, **characterized in that** the evaluation unit (7) causes a warning if the fault indicates a loss of manoeuvrability, deceleration and/or a lighting failure of the vehicle.

5. Method for signalling a fault in a vehicle (1), a fault diagnosed by a control device (5) being received, the fault being evaluated in order to determine whether a change in the driving behaviour of the vehicle (1) can be expected, a warning based on the fault being output via an output unit (6) if it is determined, on the basis of the diagnosis of the fault, that a change in a driving behaviour of the vehicle (1) can be expected as a result of the fault, the warning being output to other road users in the surroundings of the vehicle by means of a vehicle-to-vehicle communication device (12).

## Revendications

1. Dispositif (2) pour signaler un dysfonctionnement dans un véhicule (1), comprenant une première interface (3) avec un appareil de commande (5) pour le diagnostic du dysfonctionnement et une deuxième interface (4) avec une unité d'émission (6) pour émettre un avertissement à d'autres usagers de la circulation dans l'environnement du véhicule (1), l'unité d'émission (6) présentant une troisième interface (10) avec un dispositif de communication véhicule à véhicule (12) pour émettre l'avertissement à d'autres usagers de la circulation, avec une unité d'analyse (7) qui reçoit, par le biais de la première interface (3), par l'appareil de commande (5), un diagnostic du dysfonctionnement qui établit, à l'aide du diagnostic du dysfonctionnement, qu'une modification du comportement de conduite du véhicule (1) due au dysfonctionnement est attendue, et qui entraîne l'émission par le biais de la deuxième interface (4) d'un avertissement relatif au dysfonctionnement.

2. Dispositif (2) selon la revendication 1, **caractérisé en ce que** l'unité d'émission (6) dispose de moyens pour émettre un signal acoustique ou visuel (8).

3. Dispositif (2) selon l'une quelconque des revendications précédentes, **caractérisé en ce que** les interfaces (3, 4) de l'unité d'analyse (7) sont conçues sous forme d'interface CAN.

4. Dispositif (2) selon l'une quelconque des revendications précédentes, **caractérisé en ce que** l'unité d'analyse (7) donne lieu à un avertissement lorsque le dysfonctionnement indique l'impossibilité d'une manoeuvre, un ralentissement et/ou une panne d'éclairage du véhicule.

5. Procédé de signalisation d'un dysfonctionnement dans un véhicule (1), un dysfonctionnement diagnostiqué par un appareil de commande (5) étant reçu, le dysfonctionnement étant analysé pour savoir si une modification du comportement de conduite du véhicule (1) doit être attendue, un avertissement se rapportant au dysfonctionnement étant émis par le biais d' une unité d'émission (6) lorsqu'il est constaté, à l'aide du diagnostic du dysfonctionnement, qu'une modification d'un comportement de conduite du véhicule (1) due au dysfonctionnement est attendue, l'avertissement étant émis dans l'environnement du véhicule à d'autres usagers de la circulation au moyen d'un dispositif de communication véhicule à véhicule (12).
